(19) **Europäisches Patentamt / European Patent Office / Office européen des brevets**

(11) **EP 1 462 950 B1**

(12) **EUROPEAN PATENT SPECIFICATION**

(45) Date of publication and mention
of the grant of the patent:
**29.08.2007 Bulletin 2007/35**

(51) Int Cl.:
*G06F 17/30* (2006.01)   *G06F 17/27* (2006.01)
*G10L 15/18* (2006.01)

(21) Application number: **03007058.5**

(22) Date of filing: **27.03.2003**

(54) **Method for language modelling**

Verfahren zur Sprachmodellierung

Procédé pour la modélisation du language

(84) Designated Contracting States:
**DE FR GB**

(43) Date of publication of application:
**29.09.2004 Bulletin 2004/40**

(73) Proprietor: **Sony Deutschland GmbH**
**10785 Berlin (DE)**

(72) Inventor: **Valsan, Zica**
**70327 Stuttgart (DE)**

(74) Representative: **Müller - Hoffmann & Partner**
**Patentanwälte,**
**Innere Wiener Strasse 17**
**81667 München (DE)**

(56) References cited:
WO-A-00/33215          US-A- 5 857 179
US-A- 6 052 657

• BAYER T ET AL: "CATEGORIZING PAPER DOCUMENTS. A GENERIC SYSTEM FOR DOMAN AND LANGUAGE INDEPENDENT TEXT CATEGORIZATION" COMPUTER VISION AND IMAGE UNDERSTANDING, ACADEMIC PRESS, US, vol. 70, no. 3, 1 June 1998 (1998-06-01), pages 299-306, XP000754535 ISSN: 1077-3142
• KASKI S: "Dimensionality reduction by random mapping: fast similarity computation for clustering" NEURAL NETWORKS PROCEEDINGS, 1998. IEEE WORLD CONGRESS ON COMPUTATIONAL INTELLIGENCE. THE 1998 IEEE INTERNATIONAL JOINT CONFERENCE ON ANCHORAGE, AK, USA 4-9 MAY 1998, NEW YORK, NY, USA,IEEE, US, 4 May 1998 (1998-05-04), pages 413-418, XP010286551 ISBN: 0-7803-4859-1

**EP 1 462 950 B1**

**Description**

The invention relates to a method for corpus analysis, to a method for a language modeling, and to a method for recognizing speech.

In many tasks involving the treatment of natural language, such as, e.g. speech recognition, information retrieval, and spoken language understanding, very large text corpora are the basis for statistical methods. However, such very large text corpora often cannot be used entirely. For example, in speech recognition, when training a language model, it may not make sense to use an entire very large text corpus containing many different topics, but only parts of the very large text corpus containing a certain and important target domain, i.e. to separate the very large text corpus into different clusters of interest. In fact, it can be even harmful to the recognition process to use an entire and often inhomogeneous very large text corpus to train a language model, because the lack of homogeneity will cause a poor recognition rate.

As regards prior art, US 5.857.179 discloses a method for determining key words of documents. Thereby, an initial document by term matrix is formed, each document being represented by a respective M dimensional vector, where M represents the number of terms or words in a predetermined domain of documents. The dimensionality of the initial matrix is reduced to form resultant vectors of the documents. The resultant vectors are then clustered such that correlated documents are grouped into respective clusters. For each cluster, the terms having greatest impact on the documents in that cluster are identified. The identified terms represent key words of each document in that cluster.

Further prior art is known from WO 00/33215 disclosing a method of extracting characterizing terms from a document comprising the steps of extracting terms from the document, counting the number of occurrences of each term extracted from the document to establish a frequency value for each term, counting the characters or strokes in each term to establish a character count for each term, multiplying the frequency value for each term or a monotonic function thereof by the character count for each term for each term to establish a modulus for each term, and sorting the terms according to their moduli whereby the terms with the greatest moduli may be accepted as key words characteristic of the document's content.

Document US 6 052 657, on the other hand, disclosed text segmentation and topic identification so as to define clusters for each of which a language model is generated.

It is an object of the invention to provide a method for a language modeling, and a method for recognizing speech for separating a text corpus into text clusters that are advantageous with respect to a certain application involving the use of text clusters of a predetermined type.

To achieve this objective, the invention provides a method for language modeling, a method for recognizing speech, a corpus analysis system, a computer program product, and a computer readable storage medium as defined in claims 1, 20, 21, 22, and 23, respectively. Further features and preferred embodiments are respectively defined in respective sub-claims.

The method for corpus analysis according to the present invention comprises the steps of receiving a corpus containing a certain number of documents, assigning weights to terms of a predetermined term set, which weights are descriptive for the global importance of a term with respect to said corpus, determining a global ranking order of at least part of said terms with respect to said weights, deriving a key term vector for each of said documents, which key term vector contains the number of occurrences of each of at least part of said terms, said number of occurrences being ordered according to said global ranking order, and assigning at least one domain to at least one of said documents using said respective key term vector or a respective transformed key term vector.

This means, a main idea of the invention is to determine terms, e.g. words, which are important with respect to the entire corpus and then use these important terms in order to derive a key term vector for each document, which key term vector can then be used in order to cluster the corpus. Clustering can mean, for example, to determine documents within the corpus containing the same topic or domain.

Preferably, said at least one domain is assigned to said at least one of said documents using a classifier, wherein an input to said classifier is said respective key term vector or said respective transformed key term vector. An advantage of the invention with respect to the classifier is, that by only using the words with a high weight value, i.e. important words with respect to the entire corpus, the key term vectors used as input to the classifier have a reasonable dimensionality. This reasonable dimensionality means, that the classifier can be trained successfully. If all words of the term set would be used without the selection by the weights, the key term vectors would be very high dimensional and sparse, i.e. the vector space would only be covered very poorly by training examples (curse of dimensionality).

In a preferred embodiment, said classifier is based on vector quantization techniques. Using vector quantization techniques means, that each cluster of the corpus, i.e. documents on a specific topic, are represented by a codebook vector, in the following also referred to as code vector. The main advantages thereby are speech and precision.

Advantageously, said classifier is based on a splitting method, wherein an averaged key term vector is determined by averaging said key term vector and a predetermined number of code vector is determined by recursively or iteratively splitting said averaged key term vector. It is also possible to combine vector quantization techniques and the splitting method. As splitting method, the split LBG method is used. LBG stands for Linde, Buzo, Gray, the inventors of the split LBG method and is known from prior art. The main advantage of split LBG against other automatic learning techniques are speed and precision. When applying the LBG splitting method, an initial codebook is needed. This initial codebook is obtained by first determining an initial code vector, which is set to be the average of the entire sequence of coded documents, i.e. the average of all key term vectors. The initial code vector is then split into two code vectors. These are again split, i.e. an iterative algorithm is performed, continuing now with these two code vectors as the new initial code vectors. The iterative splitting is repeated until the desired number of code vectors is obtained. For consistency reasons, the number of code vectors is equal to the number of topics, i.e. the number of domains in the corpus. At the end of the splitting method, each document vector, i.e. key term vector, is assigned to a code vector.

Advantageously, said respective transformed key term vector is generated by normalizing the respective key term vector or a derivative thereof. This can be an important step, if, e.g. a method for dimensionality reduction is applied, which requires normalized vectors as input vectors. By the normalization, differences between two similar documents with different sizes are reduced.

Further, in a preferred embodiment said respective transformed key term vector is generated by applying random mapping projection techniques to the respective key term vector or to a derivative thereof. Generally, other techniques for dimensionality reduction may be used, however, the random mapping projection is advantageous, because it is fast and the relative distances between different mapped input vectors are preserved. This in turn is important for the classifier. It is also important to reduce the dimensionality of the key term vectors because the classifier can be trained more effectively.

In a further preferred embodiment of the invention said terms are chosen to be words.

Further, said term set may contain all different words of said corpus. This way, the dimension of the key term vectors may be chosen to have a predetermined length, which corresponds to the number of words in said corpus.

It can also be advantageous if said term set contains all different words of said corpus except function word. Function words are non-content words, e.g. particles, pronouns, prepositions, and similar part-of-speech tags. By removing function words from the words for which weights are determined, the dimension of the key term vectors can effectively be reduced. Again, this is important for the successful classification of the classifier.

Further, said term set may contain all different words of said corpus except very infrequent words. By removing very infrequent words again the dimensionality of the resulting key term vectors can be reduced. Generally, by removing very infrequent words, words that are not spelled correctly are removed from the word list for which weights are determined. Very infrequent in this context may e.g. mean less than 10 times.

It is also possible that said term set contains only words from a predetermined application vocabulary. This also reduces the dimensionality of the resulting key term vectors, as only weights for specific words are determined. Further, when using the method for corpus analysis within the method for language modeling as defined below, language models may be built for a specific domain, which is represented by the predetermined application vocabulary.

It is also possible, that said terms are chosen to be n-grams. The advantage of using n-grams is two-fold: First, it decreases the computational cost by discarding all irrelevant documents, i.e. documents in which the corresponding n-grams are missing; second, it improves the classifier performance by providing more domain-oriented clusters without garbage information and thereafter more domain specific language models can be generated in a method for language modeling as defined below.

It is also advantageous if said term set contains all different n-grams of said corpus.

Further, said term set may contain only different n-grams of said corpus that are built up of words of a predetermined application vocabulary. The advantage hereby is again that key term vectors of a low dimensionality may be generated, which is advantageous for the classifier.

Further, said terms may be chosen to be permugrams. Permugrams are a generalization of n-grams.

Also, said terms may be chosen to be phrase bigrams.

Preferably, said at least part of said terms is chosen from said term set using a predetermined threshold, wherein only terms are chosen for which the respective weight ranges above said threshold. This is a key point of the invention, and can be very important because the dimensionality of the resulting key term vectors is effectively reduced. The threshold is determined empirically, i.e. by performing experiments with different thresholds and finally choosing the threshold, which gives the best results. The value of the threshold is chosen such as to keep only a certain number of thresholded words in the ordered list, i.e. the key term vector. The number of thresholded words can be larger or smaller based on the value of the threshold. There is a trade between robustness and dimensionality. If the threshold value is too big, i.e. the number of thresholded words is small, it might not be possible to formulate a robust model. In other words, the relevant information about the topic can be missed because the representing key terms are not enough; the threshold cuts them. On the other hand having a value of the threshold too small, i.e. the number of thresholded words is huge, the model might not be able to discriminate between clusters. In other words, there are too many words without content information, which don't bring relevant information about the topic/meaning but only adds noise. The accuracy of the classifier is therefore subject to the selection of key features and respectively of the threshold value.

From the above-said it becomes clear, that it is advantageous, if said threshold is determined, such that the dimension of said key term vector is well suited for said classifier.

The weight of a specific term may be calculated as the total number of occurrences of said specific term in said corpus, divided by the number of documents that contain said specific term, multiplied by the logarithm of a quotient, which is said certain number of documents divided by the number of documents that contain said specific term. This means that according to the invention the term score, i.e. weight is computed according to the "average" importance of the term with respect to the entire corpus.

The inventive method for language modeling comprises the steps of performing a method for corpus analysis as defined above, and of training at least one domain specific language model using only documents to which the same domain was assigned. This way, topic specific language models can be generated. These language models can then be combined into a mixture-based model using an interpolation technique. The mixture-based model may then be used in a speech recognition system. The advantage of using topic specific language models or mixture-based models in a speech recognition system is that the recognition rate is higher, if the speech recognition system is applied within domains that are covered by the topic specific language models or mixture-based language models. Generally speaking, by applying the inventive method for a corpus analysis prior to language modeling topic specific language models can be built because corpus homogeneity is increased and therefore only semantically focused n-grams are output.

A method for recognizing speech according to the invention applies a language model, which is built according to the above-defined method for language modeling.

A corpus analysis system according to the invention is capable of performing or realizing a method for corpus analysis as defined above and/or the steps thereof, performing or realizing a method language modeling as defined above and/or the steps thereof, and/or performing or realizing a method for recognizing speech as defined above and/or the steps thereof.

A computer program product according to the invention comprises a computer program means adopted to perform and/or to realize the method of corpus analysis and/or the steps thereof, a method for language modeling as defined above and/or the steps thereof, and/or a method for recognizing speech as defined above and/or the steps thereof, when it is executed on a computer, a digital signal processing means, and/or the like.

A computer readable storage medium according to the invention comprises a computer program product as defined above.

The invention and advantageous details thereof will be explained by way of an exemplary embodiment thereof in the following with reference to the accompanying drawings in which

**Fig. 1** is a block diagram showing the main steps according to the invention;

**Fig. 2** is a block diagram further elucidating the steps according to the invention:

**Fig. 3** is a block diagram showing the application of the invention within a speech recognition system.

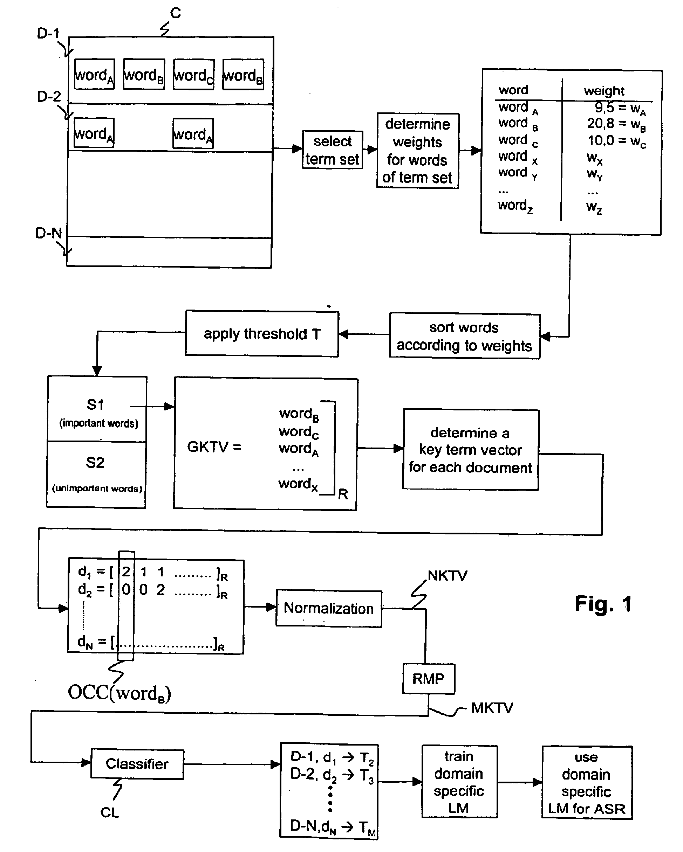

In Fig. 1 a corpus C is shown which contains N documents D-1, D-2, ..., D-N. A first document D-1 in the example of Fig. 1 contains the terms $word_A$, $word_B$ and $word_c$ among other terms. Thereby, the first document D-1 contains the $word_B$ twice. A second document D-2 contains the $word_A$ twice among other words. According to the invention a predetermined term set is now selected. Here, the predetermined term set contains all different words of said corpus. Then the function words are removed and also very infrequent words contained in the corpus C. Function words are, for example, prepositions, pronouns, or articles.

Subsequently, for all words contained in the term set weights are determined according to the following formula:

$$\text{weight}(w_{n\cdot gram}) = (\log \frac{N}{N_{n-gram}}) \cdot \frac{1}{N_{n-gram}} \sum_{k-1}^{N_{n-gram}} tf_{n-gram,k} \qquad (1)$$

In equation (1)

N is the total number of documents of the corpus,
$N_{n-gram}$ is the number of documents that contain term $w_{n-gram}$
$tf_{n-gram,k}$ is the number of occurrences of term $w_{n-gram}$ in the document k, i.e. the K-th document D-K, wherein $1 \leq K \leq N$.

In Fig. 1 the terms are chosen to be words and therefore in equation (1) $_{Wn-gram}$ refers to words, e.g. $word_A$, $word_B$, and $word_c$. In the example of Fig. 1 a first weight $w_A$ is determined for $word_A$, $w_A$ = 9,5; a second weight $W_B$ is determined for word$_B$. $W_B$ = 20,8; a third weight $w_c$ is determined for word$_c$. $w_c$ = 10.0. Further weights are determined for the rest of the words contained in the term set, e.g. word$_X$, word$_Y$, and word$_Z$. The value of the weights of the words correspond to the importance of a word with respect to the entire corpus, i.e. a high weight value indicates that the respective word is important and, a low weight value indicates that the respective word is unimportant.

Then, the words are sorted according to their weights, i.e. according to their importance with respect to the corpus C. The values of the weights were in the range of 1 to 300.

Then, a threshold T is applied to the ordered list of the weights corresponding to words. This threshold is determined empirically, i.e. experimentally. The value of the threshold T is chosen such as to keep only a certain number R of words in the ordered list of the weights corresponding to the words. The value of R can be larger or smaller based on this threshold value of T. There is a trade-off between robustness and dimensionality. If the value of threshold T is too big, i.e. the size of R is small, it might not be possible to be able to formulate a robust model. In other words, the relevant information about the topic can be missed because the representing key terms are not enough; the threshold cuts them. On the other hand having a value of the threshold too small, i.e. the size of R is huge, the model might not be able to discriminate between clusters. In other words, there are too many words without content information, which don't bring relevant information about the topic/meaning but add noise. The accuracy of the classifier is therefore subject to the selection of key features and respectively of the value of T.

By applying the threshold T the term set is separated into two sets, a first set S1 containing important words and a second set S2 containing unimportant words with respect to the entire corpus C. In the example, the first set S1 containing important words contains the following words: word$_A$, word$_B$, word$_c$, ..., word$_X$. Altogether, there are R words contained in the first set S1 containing important words. The words contained in the first set S1 are now combined into a general key term vector, which corresponds to a global ranking order GKTV of the important words. The position of a certain word within the general key term vector is determined according to the importance of a word with respect to its weight. In other words, the first element of the general key term vector is the most important word with respect to the corpus C, followed by less important words. The dimension of the general key term vector is equal to the number R of words contained in the first set S1 containing important words with respect to the entire corpus C.

Then, a key term vector is determined for each document, i.e. for the first document D-1, the second document D-2, and so on until the N-th document D-N. The key term vectors $d_1$, $d_2$, ..., $d_N$ are determined by counting the number of occurrences of the words within the respective document, which words are contained in the first set S1 containing important words. Therefore, the dimension of each key term vector is equal to the number R of words contained in the first set S1. The number of occurrences of the different words is ordered according to the importance of the respective word.

In the example of Fig. 1 a first key term vector $d_1$ is determined for the first document D-1 by determining the number of occurrences within the first document D-1 for each of the words contained in the first set S1. In the example, the most important word of the corpus, i.e. word$_B$ occurs twice in the first document D-1. Therefore, the first entry OCC (word$_B$) of the first key term vector $d_1$ is equal to 2. The second most important word, i.e. word$_c$ occurs once in the first document D-1 and therefore the second entry of the first key term vector $d_1$ is equal to 1. The third most important word of the corpus C is word$_A$, and therefore the number of occurrences of word$_A$ in the first document D-1 is determined, which is equal to 1. Therefore, the third entry of the first key term vector $d_1$ is equal to 1.

In the second document D-2 the most important word, i.e. word$_B$, and the second most important word, i.e. word$_c$ do not occur. Therefore, the first two entries of a second key term vector $d_2$ are equal to 0. However, the third most important word, word$_A$ occurs twice in the second document $d_2$. Therefore, the third entry of the second key term vector $d_2$ is equal to 2.

In the above described manner key term vectors are determined for all N documents D-1, D-2, ..., D-N.

In the embodiment of the invention of Fig. **1** the key term vectors are then normalized yielding respective normalized key term vectors NKTV. This normalization of the key term vectors is important for the following method of dimensionality reduction. Here in the example, the random mapping projection RMP is used in order to reduce the dimensionality of the different key term vectors $d_1$, $d_2$, ..., $d_N$. Random mapping projection has the main advantage that the distances or similarities between the original document vectors, i.e. key term vectors may be preserved to a considerable degree. Further, random mapping projection is very fast. The output of the method of random mapping projection are mapped key term vectors MKTV.

In random mapping projection, the original key term vector, denoted by $d \in R^R$, is multiplied by a random matrix M. The mapping $x = Md$ results in a reduced-dimensional vector $x \in R'$. r is the size of the new space. The matrix M consists of random values where the Euclidian length of each column has been normalized to unity. In the original vector **d** the components are weights of *orthogonal* unit vectors.

These mapped key term vectors MKTV are used as input for a classifier CL. In the example, as classifier a VQ technique with split LBG is used. Therefore, an initial codebook is required. This initial codebook is generated in the following way: First, an initial code vector which is set to be the average of the entire sequence of coded documents. This code vector is then split into two vectors. These two vectors are then treated as the initial code vector, i.e. the two code vectors are split into four vectors. This iterative process is repeated until a desired number of code vectors is obtained. For consistency in the example the number of code vectors is equal to the number of topics in the corpus, which are derived manually. At the end of the process each document vector of the corpus is assigned to a code vector. All document vectors, i.e. key term vectors belonging to the same code vector are put together and build a text cluster. A language model whose topic is not known yet is generated out of each such cluster. The metric used for evaluating the performance of the automatic text cluster is perplexity of each of these language models against perplexity of language models generated by manually clustered documents.

In the following a detailed description of split LBG is given.

Precision of the clustering comes as a result of the way of setting the initial centroids (codevectors). In a K-mean or Self Organizing Map they are set randomly while in a split LBG they are set as the average of the entire training sequence. Therefore, the quantization error is smaller in split LBG and the computation time is reduced.

Description of LBG algorithm:

**Preparing steps:**

- The *training sequence* consists of N source vectors (according to Fig. 1): $S_1 = \{d_1, d_2, ..... d_N\}$.

- The source vectors are r-dimensional (after RMP), e.g., $d_n = (d_{n-1}\ d_{n-2}, ... , d_{n,r})$: n = 1, 2, ..., N.

- Let M be the number of codevectors (clusters) and let $C = \{c_1, c_2, .. , c_M\}$ represents the codebook. Each codevector is r-dimensional, e.g., $c_1 = (c_{m.1}, c_{m.2}, ... , c_{m.r})$; m = 1, 2, ..., M.

- Let $S_m$ be the encoding region associated with codevector $c_m$ and let

$$P = \{S_1, S_2, ..., S_M\}$$

denote the partition of the space. If the source vector $d_n$ is in the encoding region $S_m$, then its approximation (denoted by $Q(d_n)$ is) is $c_m$: $Q(d_n) = c_m$ if $n \in S_m$.

- Assuming a squared-error distortion measure, the average distortion is given by:

$$D_{ave} = \frac{1}{Nr}\sum_{n=1}^{N}\left\|d_n - Q(d_n)\right\|^2$$

**LGB Algorithm:**

The algorithm requires an initial codebook $C^{(0)}$. This initial codebook is obtained by the *splitting* method. In this method, an initial codevector is set as the average of the entire training sequence. This codevector is then split into two. The iterative algorithm is run with these two vectors as the initial codebook. The final two codevectors are splitted into four and the process is repeated until the desired number of codevectors is obtained. The algorithm is summarized below.

Given key term vectors. Fixed $\varepsilon > 0$ to be a "smaller" number.

1. Let M=1 and

$$c_1^* = \frac{1}{Nr} \sum_{n=1}^{N} d_n \, .$$

Calculate

$$D_{ave}^* = \frac{1}{Nr} \sum_{n=1}^{N} \left\| d_n - c_1^* \right\|^2 \, .$$

2. Splitting: For i = 1, 2, ..., M set

$$c_i^{(0)} = (1 + \varepsilon)c_i^*$$

$$c_{N+i}^{(0)} = (1 - \varepsilon)c_i^*$$

$$\text{Set M = 2N}$$

3. Iteration: Let $D_{ave}^{(0)} = D_{ave}^*$. Set the iteration index i = 0.

i. For n = 1, 2, ..., N find the minimum value of $\|d_n - c_m(i)\|^2$ over all m = 1, 2, ..., M. Let m* be the index which achieves the minimum. Set

$$Q(d_n) = c_{n^*}^{(1)}$$

ii. For m = 1, 2, ..., M, update the codevector

$$c_m^{(i+1)} = \frac{\sum_{Q(d_n)=c_m^{(i)}} d_n}{\sum_{Q(d_n)=c_m^{(i)}} 1}$$

iii. Set i = i + 1

iv. Calculate

$$D_{ave}^{(i)} = \frac{1}{Nr} \sum_{n=1}^{N} \left\| d_n - Q(d_n) \right\|^2$$

v. If $(D_{ave}^{(i-1)} - D_{ave}^{(1)}/D_{ave}^{(i-1)} > \varepsilon$. go back to Step (i).

vi. Set $D_{ave}^* = D_{ave}^{(1)}$. For m = 1, 2, ..., M set $c_m^* = c_m^{(1)}$ as the final codevectors.

4. Repeat Steps 3 and 4 until the desired number of codevectors is obtained.

In the example of Fig. 1 a second topic $T_2$ is assigned to the first key term vector $d_1$ and therefore also to the first document D-1. Further, a third topic T3 is assigned to the second key term vector $d_2$ and therefore also to the second document D-2. Also, an M-th topic $T_m$ is assigned to the N-th key term vector $d_N$ and therefore also to the N-th document D-N. Then, domain specific language models LM are trained. A domain specific language model LM is only trained with documents of the same topic. It also possible to train mixture-based language models by using documents of similar topics.

This language model can then be used in a domain specific automatic speech recognition system ASR.

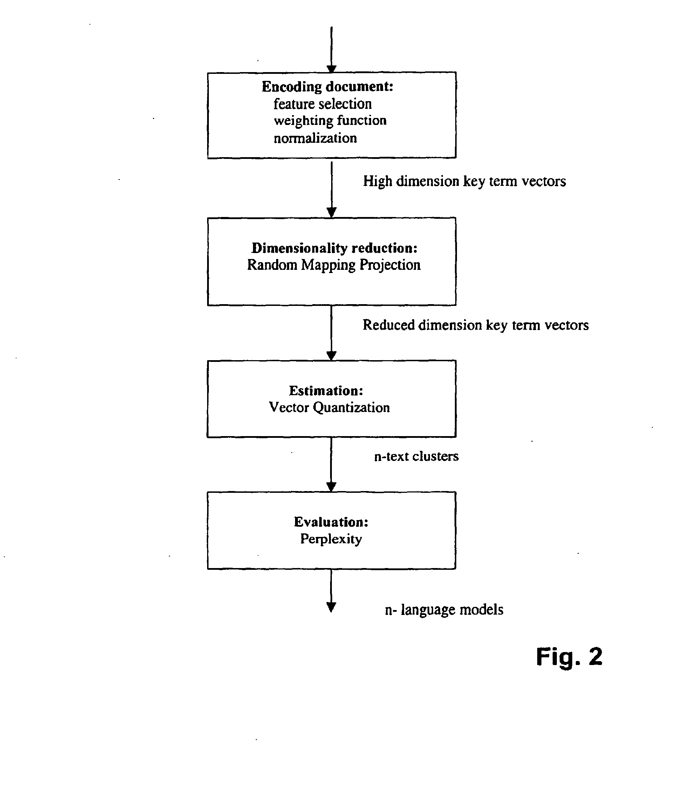

Fig. 2 shows a schematic representation of the text clustering algorithm, i.e. the method for corpus analysis. As can be seen first, the text corpus is received and then the document is encoded. Thereby, feature selection is performed which corresponds to the selection of words or terms in Fig. 1, a weighting function supplied and the obtained key term vectors are normalized as explained above. The result are high dimension key term vectors, i.e. normalized key term vectors NKTV. Then, dimensionality is reduced by random mapping projection RMP which yields reduced dimension key term vectors, i.e. mapped key term vectors MKTV. Then, vector quantization is applied to output a certain number n of text clusters. The evaluation is based on perplexity, as explained below. Finally, a certain number of N language models is output.

It should be noted that the embodiments of the invention of Fig. 1 and Fig. 2 are based on words, i.e. the terms are chosen to be words. However, as mentioned above, the invention is likewise applicable, if n-grams are used as terms. If, for example, bi-grams are used then all pairs of two subsequent words within the corpus are determined. It may be advantageous to only use bi-grams that contain words which are contained in a predetermined application vocabulary. Thus, the number of bi-grams is reduced. Then, the weighting function is applied to the bi-grams, the bi-grams are sorted according to these weights and a threshold T is applied as described with respect to Fig. 1. The bi-grams are then split into important and unimportant bi-grams and key term vectors are determined for each important bi-gram. As for the words in the embodiment of Fig. 1 a normalization is applied to the key term vectors and a method of dimensionality reduction such as random mapping projection RMP. Then, a classifier is applied to assign a topic to each of the key term vectors and documents.

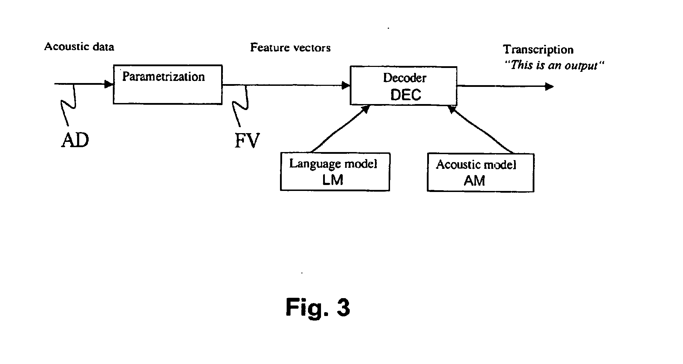

Fig. 3 shows a possible integration of the method of corpus analysis into a speech recognition system. First, a parameterization of the input speech, i.e. acoustic data is performed and thus feature vectors FV are obtained. These feature vectors FV are used by an acoustic model AM to generate word sequences, i.e. hypotheses. These hypotheses are validated or invalidated by a language model LM. As mentioned above, a language model is built for each of the clusters outputted after the process of clustering described above, i.e. after applying the method for corpus analysis. The models may be stored by an index and during the decoding phase they are retrieved by this index. They may then be combined with an overall model to obtain probability estimates for words and sequences that did not appear in the local language model. As can be seen in Fig. 3 the acoustic model AM and the language model LM are integrated into a decoder DEC. The decoder finally outputs the most likely sequence of words as description. In the example of Fig. 3 the output transcription is "This is an output". It should be noted that the invention is not limited only to speech recognition applications. It can be easily extended to any information retrieval system.

In the following, the key points of the invention are summarized:

- A weighting function leading to a new selection criterion for the key words/terms in a corpus is proposed.

- Contextual information is used, i.e. bi-grams, tri-grams, etc. leading to more specific clusters.

- Perplexity is used as a metric of measuring clustering performances, see below.

- The invention combines the following methods: feature selection, evaluation of text clustering correctness having perplexity as a measure and random mapping projection for reducing the dimensionality of the input space.

The invention proposes an approach of thematic text clustering algorithm carried out to generate specific domain language models in order to address the problem of language model adaptation. The method relies on a new discriminative *n*-gram (*n* > 1) based features selection process which reduces the influence of the corpus homogeneity and outputs only semantically focused *n*-grams as being the most representative key terms in the corpus. The measure used to evaluate the performance of the classifier is perplexity.

State-of-the-art use a term weighting schema based on a large family of so-called tf *idf* weights. Each such scheme can be characterized by its term occurrence weighting (*tf*). its document frequency weighting and its normalization. As a general rule, the weight/importance of a term is evaluated only in the framework of the document, which comprises the corresponding term.

In the invention, a set of the most representative **key terms in the corpus** is generated. Therefore their importance is evaluated in the whole corpus as an "average" value over all documents. This weighting scheme can be easily extended to describe the importance of a word considering its particular context as well, by using bigrams or trigrams.

In state of the art the prior information about the structure of documents is frequently utilized as well, for example to emphasize title words or words that appear in the beginning of the document. However, this information is not accurately enough to do a reliable labeling of the documents, and therefor in many cases it becomes irrelevant or even harmful for the task of language model adaptation.

In the invention, the final goal of text clustering is language model adaptation. Therefore perplexity is a more appropriate metric to measure the performance of the classifier.

The invention proposes a solution to address the problem of language model adaptation by using a text-clustering algorithm that relies on a new formula to evaluate the importance of a term, e.g. n-grams, in a corpus. Moreover, the accuracy of clustering is evaluated by computing the perplexity of the text clusters resulted after this algorithm.

The algorithm of text clustering is depicted in Fig. 1 and Fig. 2. The idea is to represent each document D as a vector of terms $d=(d_{\text{n-gram}}^{(1)}, d_{\text{n-gram}}^{(2)}, d_{\text{n-gram}}^{(3)},..., d_{\text{n-gram}}^{(k)})$ into a vector space so that documents with similar content have similar vectors. The key point is to select **from all documents** only those terms that are considered as bringing as much information about the context as possible. After pruning of infrequent and high frequency terms (removing in this way most of the spelling errors and non content words) the below formula was used to select the remaining words as being key terms. Each term is an $n$-gram where $n \geq 1$. We call this step as a process of keyword selection.

$$weight\ (w_{n-gram}) = (\log \frac{N}{N_{n-gram}}) \cdot \frac{1}{N_{n-gram}} \sum_{k=1}^{N_{n-gram}} tf_{n-gram,k}$$

where

N is total number of documents in the corpus,
$N_{\text{n-gram}}$ is the number of documents that contain term $w_{n-gram}$.
$tf_{\text{n-gram,k}}$ is the number of occurrences of term $w_{n-gram}$ in the document $k$.

For comparison, in prior art the importance **of a term $i$ in a document $j$** is defined as follows:

$$weight\ (w_{i,j}) = (\log \frac{N}{N_{wi}}) \cdot tf_{i,j}$$

where

$N$ is total number of documents in the corpus.
$N_w$ is the number of documents that contain word $i$,
$tf_{i,k}$ is the number of concurrencies of word $i$ in document $k$.

Term frequency is usually dampened by a function like

$$f(tf) = \sqrt{tf}\ \ or\ f(tf) = 1 + \log(tf)$$

As can be easily seen from the above formulas, in the invention the n-grams are ranked according to their "average" importance in the corpus. For instance suppose there are 100 documents in our corpus. The term *wordA* appears 7 times in one document and just 3 times in another one. According to our formula, its importance/score is computed as:

$$weight\ (wordA) = (\log \frac{100}{2}) \cdot \frac{1}{2} \cdot 10 = 28,21$$

If another word, for instance *wordB* appears just one in all of the 10 documents (uniformly distributed) its' importance in the corpus is considered as being lower as follows:

$$weight\ (wordB) = (\log \frac{100}{10}) \cdot \frac{1}{10} \cdot 10 = 3,32 \ .$$

All *n*-grams in all documents with a score exceeding an empirical threshold are selected as key terms for the corpus. When the key terms are based on unigrams the selection process is applied after the pruning technique mentioned above, i.e. after the removing of non-content words and spelling errors.

For all cases when *n* > 1 the pruning technique is skipped. The key terms selection process is applied only to those n-grams where all n constituent words belong to the vocabulary. This selection is important and efficient for most practical dialog systems, which imply medium size vocabulary. This is a means to take as much content information as possible into account without increasing the size of the coded document by using only the most relevant n-grams of the corpus. The advantage of using such complex terms (n-grams) is twofold: first, it decreases the computational cost by discarding all irrelevant documents (those that the corresponding n-grams are missing). Second, it provides more domain-oriented clusters without garbage information and thereafter more domain specific LMs can be generated.

The documents are coded based on the frequency of occurrences of these terms and represented by vectors into the vector space. Such term count vectors are typically very sparse and very high dimensional; therefore it is almost impossible to use them as such. A computationally simple method of dimensionality reduction that does not introduce a significant distortion in the data is thus desirable. Random Mapping Projection is a solution that provides a computationally feasible method for reducing the dimensionality of the data so that the mutual similarities between the data vectors are approximately preserved (state of the art).

After dimensionality reduction a VQ method is applied to outputs a certain number of text clusters.

The performance of the clustering is evaluated against the manually clustered documents, which were clustered according to a label. In our case, genre information, title or words that appear in the beginning of the document were chosen. The metric used for evaluation the performance of the text clustering is perplexity of the language models generated out of each cluster.

A preferred embodiment is depicted in Fig. 3 but is not limited only to speech recognition applications. It can be easily extended to any information retrieval system.

In a LVCSR system we can roughly summarize the steps, see Fig. 3:

1. parameterization of the input speech
2. acoustic models that outputs some word sequences of hypothesis
3. language models that validate/invalidate the sequences of words. A LM is built for each of the clusters outputted after the process of clustering described above. The models can be stored by an index and during the decoding phase, they are retrieved from this index.. They may then be combined with an overall model to obtain probability estimates for words and sequences that did not appear in the local language model.
4. decoder that outputs the most likely sequence of words

Also, the following further elucidations will help a person skilled in the art to get a better understanding of the invention, which may be called a thematic text clustering algorithm used for language model adaptation.

The invention proposes an approach of thematic text clustering algorithm carried out to generate specific domain language models in order to address the problem of language model adaptation. The invention thereby relies on a new discriminative *n*-gram (*n*>1) based features selection process, which reduces the influence of the corpus homogeneity, and outputs only semantically focused n-grams as being the most representative key terms in the corpus. The algorithm consists of the following steps: (1) sort the features (*n*-gram based) by their "average" importance according to a new selection criterion; (2) select top *m* percentile of them as representing the key features of the corpora; (3) construct feature-document (category) data and perform Random Matrix Projection (RMP) to reduce the size of the matrix; (4) find the clusters in this new the context vector space by using a VQ technique as split LBG; (5) generate LMs out of these text clusters; (6) evaluate the performance of the clustering against manually labeled documents by using perplexity as a measure. Various experimental studies are performed. Differences are observed depending on the nature of terms used as key features representing the corpus.

In the following an introduction is given.

Statistical language modeling (SLM) has been successfully applied to many domains such as speech recognition, information retrieval, and spoken language understanding. In particular, *n*-gram language modelling LM has been demonstrated to be highly effective for these domains.

In application specific spoken dialog systems, domain specific language models able to capture the spontaneous speech are required for the recognition engine. The information used to generate such language models is usually domain specific texts from newsgroups and collected dialog from the wizard-of-Oz (WoZ) experiments that are supposed to reflect the specific scenarios for which the system is intended.

Information like genre, title or words that appear in the beginning of the documents in the newspapers/newsgroups can be used to derive the topic of the documents. Based on this information domain specific text clusters can be derived and further corresponding LMs can be generated.

But topic of discussion is a dynamic concept being one of the important components of the long-term context information that often gets lost when using only such short information. Sometimes, it can change over the time within the same document. The result is a false labeling of the document leading in the final stage to a cluster that covers very different topics and further to a more general LM rather than a specific one. Therefore another solution is required which make use the information through all documents in order to find a more reliable topic label.

The invention proposes a comparative approach of automatic text clustering based on three different key features that could define the topics of the documents. The manually text-clustered documents are used as reference.

The process of feature selection is based on information retrieval IR techniques but their importance is evaluate as an average value over the all documents. The accuracy of the classifier is therefore subject to the selection of key features. The semantic classification of the document context is done by using split LBG algorithm (a VQ technique). In the following, perplexity will be used as the clustering performance measure. Based on this method the difficulty of getting reliable topic information from complicated text is overcome.

The invention was tested on Süddeutsche Zeitung corpus for SmartKom project. The experimental results indicate that any of the three approaches outperform the manually clustering but the quality of clustering depends on the type of key features selected to represent the topic of the documents.

In the following, Text clustering is more elucidated.

The goal of our research is to generate topic specific LMs and to combine them into a mixture-based model using an interpolation technique. The resulted model is used then in a speech recognition system.

In order to build the mixture-based model, the first problem is to cluster the text data. The problem of text categorization is to classify documents into a fixed number of classes. But often the underlying concept of how to assign documents to a class is unknown or is difficult to formulate in a constructive fashion. Often the documents in the collection can be manually clustered based on the information in the title, subtitle or genre in the documents. One can resort to this information to create text clusters and then corresponding LMs. But more often, this information is not enough to assign correct a document to a category. The result is a mixture of topics in the framework of the same text cluster. Therefore the corresponding LM will be useless and even harmfully for the speech recognition.

The text clustering process can be seen here as a process of extracting documents on a specific topic from a large corpus. The working definition of text categorization used in following elucidations assumes that the number of categories is fixed and known and each document is assigned to exactly one of them.

In the following feature selection and document representation is more elucidated.

For the problem of text categorization a document has to be transformed into a representation, which is suitable for the classification task. Coding the documents is based on vector space model where the documents are represented as points (or vectors) in a *m*-dimensional Euclidian space. Each dimension corresponds to a word or pair of words (features) of the vocabulary.

The question is how to define these features in the corpus and afterwards how to select only a subset of them, which helps to discriminate between classes. Having too few features can make it impossible to formulate a robust model. But having features, which do not help discriminate between classes, adds noise.

Moreover, while representing the documents as a bag of words some information about the document is lost. Additional information about the context in terms of n-grams can be an effective way to alleviate the limitation of the bag-of-word model. In order to not increase the dimension of the term-category matrix a solution is to apply the feature selection process only to those *n*-grams where all n-constituent words belong to the vocabulary (all OOVs are discarded). This selection is important and efficient for most practical dialog systems, which imply medium size vocabulary. The advantage of using such approach (n-grams) is twofold: first, it decreases the computational cost by discarding all irrelevant documents (those which the corresponding n-grams are missing). Second, it improve the classifier performances providing more domain-oriented clusters without garbage information and thereafter more domain specific LMs can be generated. In the invention a combination of three feature selection method was used:

- pruning of infrequent words/features. That means that terms are considered as features, if they occur at least a times in the training data. In this way most of the spelling errors are removed.

- pruning of high frequency words/features. This technique is supposed to eliminate non content (function) words.
- choosing features.

The key point of the last step is to select from all documents only those features that are considered as bringing as much information about the context as possible. The below formula was used to select the remaining words as being key features of the corpus. Each feature is an *n*-gram where $n \geq 1$.

$$score(w_{n\text{-}gram}) = (\log \frac{N}{N_{n\text{-}gram}}) \cdot \frac{1}{N_{n\text{-}gram}} \sum_{k=1}^{N_{n\text{-}gram}} tf_{n\text{-}gram,k} \qquad (I)$$

where

N is total number of documents in the corpus.
$N_{n\text{-}gram}$ is the number of documents that contain term $w_{n\text{-}gram}$,
$tf_{n\text{-}gram,k}$ is the number of concurrencies of term $w_{n\text{-}gram}$ in the document *k*.

As can be easily seen from the above formulas, in the invention the *n*-grams score is computed according to their "average" importance in the corpus. To select a subset of *m* features, the *m* *n*-grams with the highest score are chosen. Therefore only *n*-grams in all documents with a score exceeding an empirical threshold are selected as key features for the corpus.

Once the key features are chosen each document *d* in the collection is represented as a vector of these features into a vector space so that documents with similar content have similar vectors:

$$d = (d_{wn\text{-}gram}^{(1)}, d_{wn\text{-}gram}^{(2)}, d_{wn\text{-}gram}^{(3)}, \ldots, d_{wn\text{-}gram}^{(m)}).$$

Each dimension of the vector represents an *n*-gram selected by feature selection process described above.
The value of the vector elements $d_{wn\text{-}gram}^{(1)}$ for a document *d* is a function of the frequency counts of the *n*-gram in the document. The documents are coded based on frequency counts of these features and represented by vectors into the vector space. The resulting vectors can be thought as representing the *n*-gram histograms of the documents. The length of the document vector was normalized and has value one. In this way the direction of the vector will reflect the contents of the document.

In the following, the method of Dimensionality reduction is explained in more detail.

The main problem of the vector-space model is the large vocabulary in any sizable collection of free-text documents or the vast dimensionality of the model vectors. Such term count vectors (coded documents) are typically very sparse and very high dimensional; therefore it is almost impossible to use them as such. A computationally simple method of dimensionality reduction that does not introduce a significant distortion in the data is thus desirable Random Mapping Projection is a solution that provides a computationally feasible method for reducing the dimensionality of the data so that the mutual similarities between the data vectors are approximately preserved.

It follows a more detailed description of estimation and language model LM generation.

Once the documents have been encoded and resizable to a low dimension, so that similarity of the texts is paralleled with similarity of the respective documents vectors, the remaining task is to create text clusters out of these documents.

We resort to a VQ technique as *split LBG* ("Automatic Speech Recognition: The Development of the SPHINX SYSTEM" by K. F. Lee, Kluwer Academic Publishers, Boston, 1989) to do this task. The algorithm requires an initial codebook. This initial codebook is obtained by the splitting method. In this method, an initial codevector is set as the average of the entire sequence of coded documents. This codevector is then split into two. The iterative algorithm is run with these two vectors as the initial codebook. The final two codevectors are splitted into four and the process is repeated until the desired number of codevectors is obtained. For consistency, we keep the number of codevectors equal to number of topics in the corpus, manually generated.

At the end, each document vector of the corpus has assigned a codevector. All document vectors belonging to the same codevector are put together and build a text cluster. A LM whose topic we don't know yet is generated out of each such cluster. The metric used for evaluating the performance of the automatic text clustering is perplexity of each of these language models against perplexity of LMs generated by manually clustered documents.

In the following experimental results w.r.t. invention are described.

The invention was tested on Süddeutsche Zeitung corpus for SmartKom project. 100117 documents comprising 38500000 words were initially manually categorized in 32 clusters, each cluster representing a topic. In our case, genre information, title or words that appear in the beginning of the document were chosen for manually labeling the documents This categorization serves only as reference for evaluating the automat-clustering algorithm described above. Further we will refer to these clusters as Label-Clusters.

The size of the vocabulary used in the system dialog is a medium one, 2983 words including 31 classes (See Section Preprocessing for BSC).

In order to evaluate the effect of different types of features in defining the semantics in the corpus three sets of test have been done. They are described in the next section.

In the following a comparative study is described.

Three sets of comparative experiments were performed. They correspond to the following three approaches:

- **Word Frequency Counts** (WFC) approach: select as key features in the corpus all words with counts higher than a predefined threshold;
- **Word Score Counts** (WSC) approach: select as key features in the corpus all words whose scores computed by relation (I) exceed a predefined threshold;
- **Bigram Score Counts** (BSC) approach: select as the key features in the corpus all bigrams whose both constituent words belong to the dialog system vocabulary and whose scores computed by relation (I) exceed a predefined threshold;

The following describes the preprocessing for WFC and WSC.

For the first two approaches the following preprocessing steps are done: non-textual information, all numbers, all words in the stopword list and the words occurring less than 6 times in the whole corpus are removed. All words were converted to their base form using a stemmer. The remaining vocabulary consisted of 178000 words.

For **WFC** approach the remaining words are ranked according to their frequency count. After a predefined threshold 100000 words are preserved as being the key features.

For **WSC** approach a score is computed for each word in the remaining vocabulary using expression (I). Only 100000 words, which exceed a predefined threshold, are preserved.

The following describes the Preprocessing for BSC.

For the last approach we resort to some additional preprocessing steps in order to reduce the number of bigrams without loosing relevant information, namely: (1) only non-textual information is removed from the corpus, (2) word to class mapping is used to reduce the size of vocabulary, (3) only bigrams in the corpus which have both words in the dialog system vocabulary are preserved.

For the remaining 455000 bigrams, a score was computed based on the relation (I) and a threshold was set up. A vector of 155000 key features is preserved afterwards. The size of the dialog system vocabulary is 2983 words including 31 classes. We omitted 10000 documents in which none of the selected bigrams exist.

All documents in the corpus are coded now either into a (100117x100000) matrix or into a (90000x155000) matrix.

To reduce the document vector dimensionality we used the random mapping projection method. The reduced size of the documents was 100 for any of the approach. The size of the random matrix was (100000x100) for the first two approaches and (155000x100) for the last one.

The resulted documents into the new space were coded into a (100117x100) matrix or into a (90000x100) matrix.

This matrix was used as an input data for the *split LBG* algorithm. The number of the codevectors was 32, the same as the number of clusters manually derived in the corpus. After the LBG algorithm each document was assigned to a codevector. All documents corresponding to the same codevector are grouped together and build up a text cluster. Further, we will refer to these clusters as Smart-Clusters.

For each of these approaches described above two types of tests have been doing for judging the clustering performance: (1) label-based evaluation and (2) in-cluster evaluation.

In the following Label-based evaluation is desribed.

Based on a priori experiments it was observed that some documents in the Label-clusters are assigned to an inappropriate cluster. Accordingly, a wrong LM was derived for each cluster affecting the speech recognition performances of the dialog system. Therefore, the performances of the automatic clustering are compared against manually clustering having as reference some test data correctly labeled.

Two steps are required in this evaluation:

**Step A.**

32 Smart-clusters were produced after clustering algorithm. Each Smart-cluster was split into training files and testing files. For all training files inside of a cluster one LM was generated. There are 32 LMs in total and for convenience we refer to them as $LM_{sc-1b}$. **All test files are group around their a priori label (regardless the cluster they belong to) and together build up 32-test sets.** Perplexity of each $LM_{SC-1b}$ on the test sets was evaluated. For correctness the content of the test files was checked in order to make sure a label is correct assigned to a document. The outcome is a set of 32x32 values for perplexities.

**Step B.**

Based on a priori labeling, 32 Label-clusters were produced out of all training files used in step A. Accordingly, 32 LMs were generated and we refer to them as $LM_{labels}$. Perplexity of each of these $LM_{labels}$ was evaluated **on the same test sets as in step A.** The outcome is another set of 32x32 values for perplexities.

The experiments described in step A and step B were repeated for each of the three approaches described above.

Generally, it was found that Automatic clustering outperforms manually labeling for all approaches. Manually labeling of the documents is many times incorrect or insufficient and therefore documents with different topics are gathered together in the same cluster although they are not similar at all. The type of features influences the number of documents into a cluster and further the topic into a cluster. It seems that bigrams terms selected accordingly to the expression (I) lead to better separability between classes reflected by the reduced values of perplexities. Moreover, this way of evaluation can be seen as an indirect modality to assign a label to a cluster using perplexity as a measure.

In the following In-cluster evaluation is desribed.

Another type of performance evaluation was done in order to prove the better separability of the topics in the Smart-clusters.

**Step A.**

32 Smart-clusters were produced after clustering algorithm. Each Smart-cluster was split into training files and testing files. For all training files inside of a cluster one LM was generated. There are 32 LMs and for convenience we refer to them as $LM_{sc-1c}$. All testing files inside a cluster are grouped and a test set is generated out of them. We refer to it as in-cluster test set. There are 32 such in-cluster test sets. Perplexity of each $LM_{sc-1c}$ is evaluated for all the 32 in-cluster test sets. The outcome is a set of 32x32 values for perplexities.

**Step B.**

Based on a priori labeling, 32 Label-clusters were produced out of all training files used in step A. Accordingly, 32 LMs were generated and we refer to them as $LM_{IN-labels}$. Perplexity of each of these $LM_{IN-labels}$ was evaluated **on the same test sets as in step A.** The outcome is another set of 32x32 values for perplexities.

The experiments described in step A and step B were repeated for each of the three approaches described above.

Generally, for all Smart-clusters the value of perplexity evaluated inside the same cluster is smaller than any other perplexity value evaluated on the remaining inside test set. (e.g. perplexity of the model 25 evaluated on each of in-cluster test sets from 1 to 32 outputs the smallest value for the25 in-cluster test set). Unfortunately for Label-clusters this rule is not true anymore. These differences prove that the documents inside Smart-cluster belong to the same topic or close topics.

In the following a conclusion is given.

The automatic clustering algorithm proves to outperform the manually clustering for all these three approaches.

The new weighting function, i.e. expression (I), leading to a new selection criterion for the key features in a corpus influences the distribution of documents into a clusters and implicitly helps to better discrimination between clusters, than using frequency counts of the terms. The usage of contextual information in term of bigrams in combination with selection criterion expressed in relation (I) leads to more specific clusters. Perplexity used as a metric of measuring clustering performances can be used for labeling Smart-clusters.

**EP 1 462 950 B1**

**Reference Symbols**

| | |
|---|---|
| AD | acoustic data |
| AM | acoustic model |
| ASR | automatic speech recognition |
| C | corpus |
| CL | classifier |
| $d_1, ..., d_N$ | key term vectors |
| $d_1, d_2, ..., d_N$ | first key term vector to N-th key term vector |
| D-1, D-2, ..., D-N | first document to N-th document |
| DEC | decoder |
| FV | feature vector |
| GKTV | global ranking order |
| LM | language model |
| MKTV | mapped key term vectors |
| NKTV | normalized key term vectors |
| OCC (word) | number of occurrences of a certain term /word |
| R | dimension of key term vectors |
| RMP | random mapping projection |
| S1 | first set containing important words |
| S2 | second set containing unimportant words |
| T | threshold |
| $T_1, ..., T_M$ | topics |
| $w_A, ..., w_Z$ | weights |
| $word_A, ..., word_X$ | important terms/words of corpus |
| $word_Y, ..., word_Z$ | unimportant terms/words of corpus |

**Claims**

1. Method for language modeling. comprising the following steps:

   receiving a corpus (C) containing a certain number (N) of documents (D-1, ..., D-N);
   assigning weights ($w_A, ..., w_Z$) to terms ($word_A, ..., word_Z$) of a predetermined term set, which weights ($w_A, ..., w_Z$) are descriptive for the global importance of a term ($word_A, ..., word_Z$) with respect to said corpus (C):
   determining a global ranking order (GKTV) of at least part of said terms ($word_A, ... word_Z$) with respect to said weights ($w_A, ..., w_Z$):
   deriving a key term vector ($d_1, ..., d_N$) for each of said documents (D-1, ..., D-N), which key term vector ($d_1, ..., d_N$) contains the number of occurrences (OCC) of each of at least part of said terms [$word_A, ..., word_Z$), said number of occurrences (OCC) being ordered according to said global ranking order (GKTV), -
   assigning at least one domain ($T_1,.... T_M$) to at least one of said documents (D-1, ..., D-N) using said respective key term vector ($d_1,..... d_N$) or a respective transformed key term vector (NKTV: MKTV): and
   training at least one domain-specific language model (LM) using only documents (D-1, .... D-N) to which the same domain ($T_1, ..... T_M$) was assigned.

2. The method according to claim 1,
   **characterized in that**
   said at least one domain ($T_1,..... T_M$) is assigned to said at least one of said documents (D-1, ..., D-N) using a classifier (CL), wherein an input to said classifier is said respective key term vector ($d_1, ..., d_N$) or said respective transformed key term vector (NKTV, MKTV).

3. The method according to claim 2,
   **characterized in that**
   said classifier (CL) is based on vector quantization techniques.

4. The method according to claim 2, or 3,

15

**characterized in that**
said classifier (CL) is based on a splitting method, wherein an averaged key term vector is determined by averaging said key term vector ($d_1$,.... $d_N$) and a predetermined number of code vectors is determined by recursively splitting said averaged key term vector.

5. The method according to any one of the preceding claims,
**characterized in that**
said respective transformed key term vector (NKTV, MKTV) is generated by normalizing the respective key term vector ($d_1$,..... $d_N$) or a derivative thereof.

6. The method according to any one of the preceding claims,
**characterized in that**
said respective transformed key term vector (NKTV, MKTV) is generated by applying random mapping projection techniques to the respective key term vector ($d_1$, ..., $d_N$) or to a derivative thereof.

7. The method according to any one of the preceding claims,
**characterized in that**
said terms ($word_A$, .. , $word_Z$) are chosen to be words.

8. The method according to claim 7,
**characterized in that**
said term set contains all different words of said corpus (C).

9. The method according to claim 7,
**characterized in that**
said term set contains all different words of said corpus (C) except function words.

10. The method according to claim 7, or 9,
**characterized in that**
said term set contains all different words of said corpus (C) except very infrequent words.

11. The method according to claim 7,
**characterized in that**
said term set contains only words from a predetermined application vocabulary.

12. The method according to any one of claims 1 to 6,
**characterized in that**
said terms ($word_A$, ..., $word_Z$) are chosen to be n-grams.

13. The method according to claim 12,
**characterized in that**
said term set contains all different n-grams of said corpus (C).

14. The method according to claim 12,
**characterized in that**
said term set contains only different n-grams of said corpus (C) that are built up of words of a predetermined application vocabulary.

15. The method according to any one of claims 1 to 6,
**characterized in that**
said terms ($word_A$, ..., $word_Z$) are chosen to be permugrams.

16. The method according to any one of claims 1 to 6,
**characterized in that**
said terms ($word_A$, ..., $word_Z$) are chosen to be phrase bigrams.

17. The method according to any one of the preceding claims,
**characterized in that**

said at least part of said terms is chosen from said term set using a predetermined threshold (T), wherein only terms are chosen for which the respective weight ($w_A$ , ..., $w_Z$) ranges above said threshold (T).

18. The method according to claims 2 and 17,
**characterized in that**
said threshold (T) is determined, such that the dimension of said key term vector ($d_1$, ..., $d_N$) is well suited for said classifier.

19. The method according to any one of the preceding claims
**characterized in that**
the weight ($w_A$ , ..., $w_Z$) of a specific term ($word_A$...., $word_Z$) is given as

- the total number of occurrences of said specific term ($word_A$, ..., $word_Z$) in said corpus (C),
- divided by the number of documents (D-1, ..., D-N) that contain said specific term ($word_A$, .... $word_Z$),
- multiplied by the logarithm of a quotient, which is said certain number (N) of documents (D-1, ..., D-N) divided by the number of documents (D-1, ..., D-N) that contain said specific term ($word_A$, ..., $word_Z$).

20. Method for recognizing speech using a language model (LM) built according to claim 1.

21. Corpus analysis system comprising means adapted to

- a method of language modeling according to claim 1 and/or to
- a method for recognizing speech according to claim 20

22. Computer program product,
comprising computer program means adapted to perform a method for language modeling according to claim 1 and/or the steps thereof, and/or a method for recognizing speech according to claim 20 and/or the steps thereof, when it is executed on a computer, a digital signal processing means, and/or the like.

23. Computer readable storage medium,
comprising a computer program product according to claim 22.

**Patentansprüche**

1. Verfahren zur Sprachmodellierung umfassend die folgenden Schritte:

Empfangen eines Korpus (C), der eine gewisse Anzahl (N) von Dokumenten (D-1, ..., D-N) enthält;
Zuordnung von Gewichten ($w_A$, ..., $w_Z$) zu Begriffen ($word_A$, ..., $word_Z$) eines vorgegebenen Begriffssatzes, wobei die Gewichte ($w_A$, ..., $w_Z$) die globale Wichtigkeit eines Begriffs ($word_A$, ..., $word_Z$) in Bezug auf das Korpus (C) beschreiben;
Bestimmung einer globalen Rangordnung (GKTV) von wenigstens einem Teil der Begriffe ($word_A$, ..., $word_Z$) in Bezug auf die Gewichte ($_{WA}$, ..., wz);
Ableiten eines Schlüsselbegriffsvektors ($d_1$, ..., $d_N$) für jedes der Dokumente (D-1, ..., D-N), wobei der Schlüsselbegriffsvektor ($d_1$, ..., $d_N$) die Anzahl des Auftretens (OCC) von jedem von wenigstens einem Teil der Begriffe ($word_A$, ..., $word_Z$) enthält, wobei die Anzahl des Auftretens (OCC) gemäß der globalen Rangordnung (GKTV) geordnet ist;
Zuordnen von wenigstens einer Domäne ($T_1$, ..., $T_M$) zu wenigstens einem der Dokumente (D-1, ..., D-N) unter Verwendung des jeweiligen Schlüsselbegriffsvektors ($d_1$, ..., $d_N$) oder eines entsprechenden, transformierten Schlüsselbegriffsvektors (NKTV; MKTV); und
Trainieren von wenigstens einem Domänen spezifischen Sprachmodell (LM) unter Verwendung nur derjenigen Dokumente (D-1, ..., D-N), denen die gleiche Domäne ($T_1$, ..., $T_M$) zugeordnet wurde.

2. Verfahren nach Anspruch 1, **dadurch gekennzeichnet, dass** die wenigstens eine Domäne ($T_1$, ..., $T_M$) dem wenigstens einen der Dokumente (D-1, ..., D-N) unter Verwendung eines Klassifizierers (CL) zugeordnet wird, wobei eine Eingabe an den Klassifizierer der jeweilige Schlüsselbegriffsvektor ($d_1$, ..., $d_N$) oder der entsprechende, transformierte Schlüsselbegriffsvektor (NKTV, MKTV) ist.

**3.** Verfahren nach Anspruch 2, **dadurch gekennzeichnet, dass** der Klassifizierer (CL) auf Vektor-Quantifizierungstechniken beruht.

**4.** Verfahren nach Anspruch 2 oder 3, **dadurch gekennzeichnet, dass** der Klassifizierer (CL) auf einem Splittungsverfahren basiert, wobei ein gemittelter Schlüsselbegriffsvektor **dadurch** bestimmt wird, dass der Schlüsselbegriffsvektor $(d_1, ..., d_N)$ gemittelt wird, und dass eine vorgegebene Anzahl von Code-Vektoren **dadurch** bestimmt wird, dass der gemittelte Schlüsselbegriffsvektor rekursiv gesplittet wird.

**5.** Verfahren nach einem der vorhergehenden Ansprüche, **dadurch gekennzeichnet, dass** der entsprechende, transformierte Schlüsselbegriffsvektor (NKTV, MKTV) durch Normalisieren des entsprechenden Schlüsselbegriffsvektors $(d_1, ..., d_N)$ oder einer Ableitung davon erzeugt wird.

**6.** Verfahren nach einem der vorhergehenden Ansprüche, **dadurch gekennzeichnet, dass** der entsprechende, transformierte Schlüsselbegriffsvektor (NKTV, MKTV) durch Anwendung von Zufalls-Zuordnungsprojektionstechniken auf den entsprechenden Schlüsselbegriffsvektor $(d_1, ..., d_N)$ oder eine Ableitung davon erzeugt wird.

**7.** Verfahren nach einem der vorhergehenden Ansprüche, **dadurch gekennzeichnet, dass** als Begriffe $(word_A, ..., word_Z)$ Worte gewählt werden.

**8.** Verfahren nach Anspruch 7, **dadurch gekennzeichnet, dass** der Begriffssatz alle unterschiedlichen Worte des Korpus (C) enthält.

**9.** Verfahren nach Anspruch 7, **dadurch gekennzeichnet, dass** der Begriffssatz alle unterschiedlichen Worte des Korpus (C) außer den Funktionsworten enthält.

**10.** Verfahren nach Anspruch 7 oder 9, **dadurch gekennzeichnet, dass** der Begriffssatz alle unterschiedlichen Worte des Korpus (C) außer sehr seltenen Worten enthält.

**11.** Verfahren nach Anspruch 7, **dadurch gekennzeichnet, dass** der Begriffssatz nur Worte eines vorgegebenen Anwendungsvokabulars enthält.

**12.** Verfahren nach einem der Ansprüche 1 bis 6, **dadurch gekennzeichnet, dass** als Begriffe $(word_A, ..., word_Z)$ n-Begriffsgruppen gewählt werden.

**13.** Verfahren nach Anspruch 12, **dadurch gekennzeichnet, dass** der Begriffssatz alle unterschiedlichen n-Begriffsgruppen des Korpus (C) enthält.

**14.** Verfahren nach Anspruch 12, **dadurch gekennzeichnet, dass** der Begriffssatz nur unterschiedliche n-Begriffsgruppen des Korpus (C) enthält, die aus Worten eines vorgegebenen Anwendungsvokabulars aufgebaut sind.

**15.** Verfahren nach einem der Ansprüche 1-6, **dadurch gekennzeichnet, dass** als Begriffe $(word_A, ..., word_Z)$ Permutations-Begriffsgruppen gewählt werden.

**16.** Verfahren nach einem der Ansprüche 1-6, **dadurch gekennzeichnet, dass** als Begriffe $(word_A, ..., word_Z)$ zweiteilige Begriffsgruppen gewählt werden.

**17.** Verfahren nach einem der vorhergehenden Ansprüche, **dadurch gekennzeichnet, dass** wenigstens ein Teil der Begriffe aus dem Begriffssatz unter Verwendung eines vorgegebenen Schwellenwerts (T) ausgewählt wird, wobei nur Begriffe ausgewählt werden, für die die jeweiligen Gewichts-$(w_A, ..., w_Z)$-Bereiche oberhalb des Schwellenwerts (T) liegen.

**18.** Verfahren nach den Ansprüchen 2 und 17, **dadurch gekennzeichnet, dass** der Schwellenwert (T) so gewählt wird, dass die Dimension des Schlüsselbegriffsvektors $(d_1, ..., d_N)$ für den Klassifizierer gut geeignet ist.

**19.** Verfahren nach einem der vorhergehenden Ansprüche, **dadurch gekennzeichnet, dass** das Gewicht $(W_A, ..., wz)$ eines speziellen Begriffs $(word_A, ..., word_Z)$ gegeben ist als:

- die gesamte Anzahl des Auftretens eines speziellen Begriffs $(word_A, ..., word_Z)$ in dem Korpus (C),

- dividiert durch die Anzahl der Dokumente (D-1, ..., D-N), die den speziellen Begriff (word$_A$, ..., word$_Z$) enthalten,
- multipliziert mit dem Logarithmus eines Quotienten, der gegeben ist durch die vorgegebene Anzahl (N) der Dokumente (D-1, ..., D-N) dividiert durch die Anzahl der Dokumente (D-1, ..., D-N), die den speziellen Begriff (word$_A$, ..., word$_Z$) enthalten.

**20.** Verfahren zum Erkennen von Sprache unter Verwendung eines Sprachmodells (LM), das gemäß Anspruch 1 aufgebaut ist.

**21.** Korpus-Analysesystem umfassend Mittel, die geeignet sind, ein Verfahren der Sprachmodellierung gemäß Anspruch 1 und/oder ein Verfahren zum Erkennen von Sprache entsprechend Anspruch 20 durchzuführen.

**22.** Computerprogrammprodukt umfassend ein Computerprogramm-Mittel, das geeignet ist, ein Verfahren zur Sprachmodellierung entsprechend Anspruch 1 und/oder die Schritte davon und/oder ein Verfahren zum Erkennen von Sprache gemäß Anspruch 20 und/oder der Schritte davon durchzuführen, wenn es auf einem Computer, einer digitalen Signalverarbeitungseinrichtung und/oder dergleichen ausgeführt wird.

**23.** Computerlesbares Speichermedium umfassend ein Computerprogrammprodukt gemäß Anspruch 22.

**Revendications**

**1.** Procédé destiné à la modélisation du langage, comprenant les étapes suivantes :

réception d'un corpus (C) contenant un certain nombre (N) de documents (D-1, ..., D-N) ;
attribution de poids (W$_A$, ..., W$_Z$) à des termes (mot$_A$, ..., mot$_Z$) d'une série de termes prédéterminée, lesquels poids (W$_A$, ..., W$_Z$) sont descriptifs pour l'importance globale d'un terme (mot$_A$, ..., mot$_Z$) par rapport audit corpus (C) ;
détermination d'un ordre de classement global (GKTV) d'au moins une partie desdits termes (mot$_A$, ..., mot$_Z$) par rapport auxdits poids (w$_A$, ..., w$_Z$);
dérivation d'un vecteur de terme clé (d$_1$, ..., d$_N$) pour chacun desdits documents (D-1, ..., D-N), lequel vecteur de terme clé (d$_1$, ..., d$_N$) contient le nombre d'occurrences (OCC) de chacun d'au moins une partie desdits termes (mot$_A$, ..., mot$_Z$), ledit nombre d'occurrences (OCC) étant rangé conformément audit ordre de classement global (GKTV) ;
attribution d'au moins un domaine (T$_1$, ..., T$_M$) à au moins un desdits documents (D-1, ..., D-N) en utilisant ledit vecteur de terme clé respectif (d$_1$, ..., d$_N$) ou un vecteur de terme clé transformé respectif (NKTV ; MKTV) ; et
formation d'au moins un modèle de langage spécifique à un domaine (LM) en utilisant uniquement des documents (D-1, ..., D-N) auxquels le même domaine (T$_1$, ..., T$_M$) a été assigné.

**2.** Procédé selon la revendication 1,
**caractérisé en ce que**
ledit au moins un domaine (T$_1$, ..., T$_M$) est attribué audit au moins un desdits documents (D-1, ..., D-N) en utilisant un classifieur (CL), dans lequel une entrée dans ledit classifieur est ledit vecteur de terme clé respectif (d$_1$, ..., d$_N$) ou ledit vecteur de terme clé transformé respectif (NKTV ; MKTV).

**3.** Procédé selon la revendication 2,
**caractérisé en ce que**
ledit classifieur (CL) est basé sur des techniques de quantification des vecteurs.

**4.** Procédé selon la revendication 2 ou 3,
**caractérisé en ce que**
ledit classifieur (CL) est basé sur un procédé de répartition, dans lequel un vecteur de terme clé moyen est déterminé en faisant la moyenne dudit vecteur de terme clé (d$_1$, ..., d$_N$) et un nombre prédéterminé de vecteurs de code est déterminé en répartissant de façon récursive ledit vecteur de terme clé moyen.

**5.** Procédé selon l'une quelconque des revendications précédentes,
**caractérisé en ce que**
ledit vecteur de terme clé transformé respectif (NKTV, MKTV) est généré en normalisant le vecteur de terme clé respectif (d$_1$, ..., d$_N$) ou un dérivé de celui-ci.

**6.** Procédé selon l'une quelconque des revendications précédentes,
**caractérisé en ce que**
ledit vecteur de terme clé transformé respectif (NKTV, MKTV) est généré en appliquant des techniques de projection de mappage aléatoire au vecteur de terme clé respectif ($d_1$, ..., $d_N$) ou à un dérivé de celui-ci.

**7.** Procédé selon l'une quelconque des revendications précédentes,
**caractérisé en ce que**
lesdits termes ($mot_A$, ..., $mot_Z$) sont choisis pour être des mots.

**8.** Procédé selon la revendication 7,
**caractérisé en ce que**
ladite série de termes contient tous les mots différents dudit corpus (C).

**9.** Procédé selon la revendication 7,
**caractérisé en ce que**
ladite série de termes contient tous les mots différents dudit corpus (C) sauf les mots non significatifs.

**10.** Procédé selon la revendication 7 ou 9,
**caractérisé en ce que**
ladite série de termes contient tous les mots différents dudit corpus (C) sauf les mots très rares.

**11.** Procédé selon la revendication 7,
**caractérisé en ce que**
ladite série de termes contient uniquement des mots provenant d'un vocabulaire d'application prédéterminé.

**12.** Procédé selon l'une quelconque des revendications 1 à 6,
**caractérisé en ce que**
lesdits termes ($mot_A$, ..., $mot_Z$) sont choisis pour être des n-grammes.

**13.** Procédé selon la revendication 12,
**caractérisé en ce que**
ladite série de termes contient tous les n-grammes différents dudit corpus (C).

**14.** Procédé selon la revendication 12,
**caractérisé en ce que**
ladite série de termes contient uniquement les différents n-grammes dudit corpus (C) qui sont constitués de mots d'un vocabulaire d'application prédéterminé.

**15.** Procédé selon l'une quelconque des revendications 1 à 6,
**caractérisé en ce que**
lesdits termes ($mot_A$, ..., $mot_Z$) sont choisis pour être des permugrammes.

**16.** Procédé selon l'une quelconque des revendications 1 à 6,
**caractérisé en ce que**
lesdits termes ($mot_A$, ..., $mot_Z$) sont choisis pour être des bigrammes de phrase.

**17.** Procédé selon l'une quelconque des revendications précédentes,
**caractérisé en ce que**
ladite au moins partie desdits termes est choisie parmi ladite série de termes en utilisant un seuil prédéterminé (T), dans lequel uniquement des termes dont le poids respectif ($W_A$, ..., $W_Z$) se trouve au-dessus dudit seuil (T) sont choisis.

**18.** Procédé selon les revendications 2 et 17,
**caractérisé en ce que**
ledit seuil (T) est déterminé, de sorte que la dimension dudit vecteur de terme clé ($d_1$, ..., $d_N$) convienne bien audit classifieur.

**19.** Procédé selon l'une quelconque des revendications précédentes,

**caractérisé en ce que**

le poids (W$_A$, ..., W$_Z$) d'un terme spécifique (mot$_A$, ..., mot$_Z$) est donné comme

- le nombre total d'occurrences dudit terme spécifique (mot$_A$, ..., mot$_Z$) dans ledit corpus (C),
- divisé par le nombre de documents (D-1, ..., D-N) qui contiennent ledit terme spécifique (mot$_A$, ..., mot$_Z$),
- multiplié par le logarithme d'un quotient, qui est ledit certain nombre (N) de documents (D-1, ..., D-N) divisé par le nombre de documents (D-1, ..., D-N) qui contiennent ledit terme spécifique (mot$_A$, ..., mot$_Z$).

20. Procédé destiné à la reconnaissance vocale utilisant un modèle de langage (LM) construit selon la revendication 1.

21. Système d'analyse de corpus comprenant un moyen adapté pour

- mettre en oeuvre un procédé de modélisation du langage selon la revendication 1 et/ou pour
- mettre en oeuvre un procédé destiné à la reconnaissance vocale selon la revendication 20.

22. Produit de programme informatique,
comprenant un moyen de programme informatique adapté pour mettre en oeuvre un procédé destiné à la modélisation du langage selon la revendication 1 et/ou les étapes de celui-ci, et/ou un procédé destiné à la reconnaissance vocale selon la revendication 20 et/ou les étapes de celui-ci, lorsqu'il est exécuté sur un ordinateur, un moyen de traitement de signal numérique, et/ou autre.

23. Support de stockage pouvant être lu sur ordinateur,
comprenant un produit de programme informatique selon la revendication 22.

**Fig. 1**

**Encoding document:**
feature selection
weighting function
normalization

High dimension key term vectors

**Dimensionality reduction:**
Random Mapping Projection

Reduced dimension key term vectors

**Estimation:**
Vector Quantization

n-text clusters

**Evaluation:**
Perplexity

n- language models

# Fig. 2

Acoustic data

Feature vectors

Transcription
*"This is an output"*

Parametrization

Decoder
DEC

AD

FV

Language model
LM

Acoustic model
AM

# Fig. 3

**REFERENCES CITED IN THE DESCRIPTION**

**Patent documents cited in the description**

- US 5857179 A
- WO 0033215 A
- US 6052657 A